# EUROPEAN PATENT SPECIFICATION

(11) **EP 3 378 752 B1**
(45) Date of publication and mention of the grant of the patent: **27.05.2020**
(21) Application number: 17189336.5
(22) Date of filing: 05.09.2017
(51) Int. Cl.: B62K 25/30, B62K 25/28, B62K 19/30, B62K 19/34

(54) **BOTTOM BRACKET DEVICE AND A BICYCLE FRAME WITH THE SAME**
TRETLAGERVORRICHTUNG UND FAHRRADRAHMEN
DISPOSITIF DE SUPPORT INFÉRIEUR ET CADRE DE BICYCLETTE

(30) Priority: 20.03.2017 TW 106203875 U
(43) Date of publication of application: 26.09.2018
(73) Proprietor: A-Pro Tech Co., Ltd., Taichung City 43769 (TW)
(72) Inventor: LI, Seng-Chyi, 36041 Miaoli City (TW); HSU, Shun-Min, 54442 Guosing Township (TW)
(74) Representative: Wynne-Jones IP Limited

(56) References cited:
- EP-A2- 2 228 290
- WO-A2-2011/005005
- DE-U1-202013 103 816
- US-A- 5 346 237
- US-A1- 2012 228 850
- US-A1- 2013 093 160
- US-A1- 2014 060 950

## Description

The disclosure relates to a bicycle frame, and more particularly to a bicycle frame having a bottom bracket device in which a pivot space is defined for accommodating a front pivot end portion of a rear fork assembly.

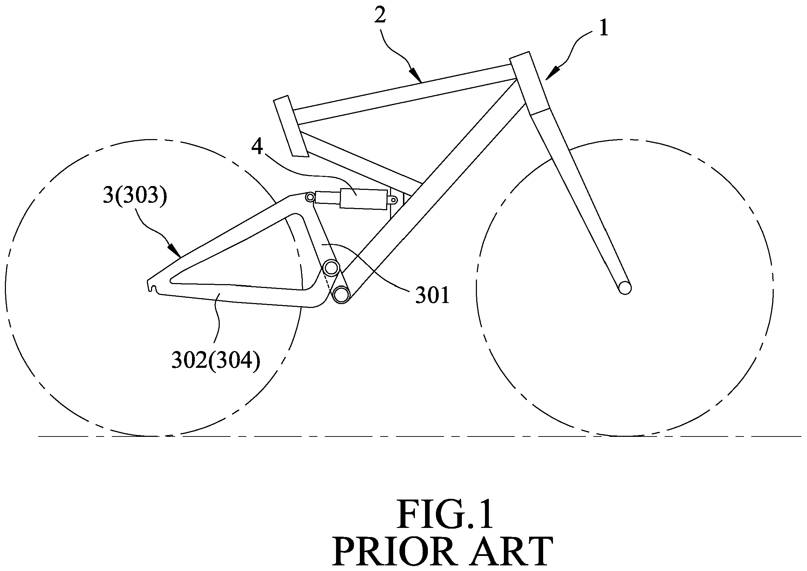

Referring to FIG. 1, a conventional cross-country bicycle frame 1 includes a front frame body 2, a rear frame body 3 and a suspension 4 disposed between the front and rear frame bodies 2, 3. The rear frame body 3 includes a lower seat tube 301, a chain stay 302 connected with the lower seat tube 301, and a rear stay 303 connected with both the lower seat tube 301 and the chain stay 302. The chain stay 302 has two forks 304 pivotably connected to two opposite sides of the lower seat tube 301, respectively. The suspension 4 is disposed to control the amount of movement between the rear frame body 3 and the front frame body 2.

Since the front ends of the forks 304 are disposed to project laterally and outwardly of the opposite sides of the lower seat tube 301, an undesired wind resistance is produced and adversely affect movement of the bicycle frame 1. Moreover, the projecting forks 304 negatively affect the outer appearance of the bicycle frame 1. In US 2012/0228850 A1, a rear suspension system for a bicycle is disclosed to include a front part having a top tube, a down tube and a seat bracket, and a rear part has seat stays and chain stays. The chain stays are connected to a down link unit which extends into a frame of the seat bracket. A shock-absorbing device is pivotably connected to a first pivotal portion on the top link unit and a second pivotal portion on the down link unit to provide stable buffering action. The above document US 2012/228850 discloses a bottom bracket device according to the preamble of claim 1.

Therefore, an object of the disclosure is to provide a bottom bracket device and a bicycle frame with the same that can alleviate at least one of the drawbacks of the prior art

According to the disclosure, a bottom bracket device includes a bottom bracket shell, a first down tube, a first seat tube and a rear fork assembly. The bottom bracket shell surrounds a spindle axis in a left-and-right direction to have left and right opened ends. The first down tube is connected to and extends forwardly from the bottom bracket shell. The first seat tube is connected to and extends upwardly from the bottom bracket shell, and has two side walls which are disposed between the left and right opened ends in the left-and-right direction. The side walls define therebetween a receiving space which has a rear access opening that is opposite to the first down tube in a front-and-rear direction. The rear fork assembly has at least one front endportion which is inserted into the receiving space from the rear access opening and which is pivotably connected to the side walls of the first seat tube about a pivot axis in the left-and-right direction.

According to the disclosure, a bicycle frame includes a bottom bracket device as mentioned above, a front frame body, a rear frame body and a shock absorber. The front frame body includes a second down tube which is connected to and extends forwardly and upwardly from the first down tube, and a second seat tube which is connected to and extends upwardly from the first seat tube. The rear frame body includes two chain stay forks each of which is connected to and extends rearwardly from the rear fork assembly, and a rear stay which is connected to and extends forwardly and upwardly from the chain stay forks . The shock absorber is disposed between the front frame body and the rear stay.

Other features and advantages of the disclosure will become apparent in the following detailed description of the embodiment with reference to the accompanying drawings, of which:
FIG. 1 is a schematic side view of a conventional cross-country bicycle frame;
FIG. 2 is a perspective view illustrating an embodiment of a bicycle frame according to the disclosure;
FIG. 3 is a partly exploded perspective view of the embodiment;
FIG. 4 is a sectional view taken along line IV-IV of FIG. 2; and
FIG. 5 is a sectional view taken along line V-V of FIG. 4.

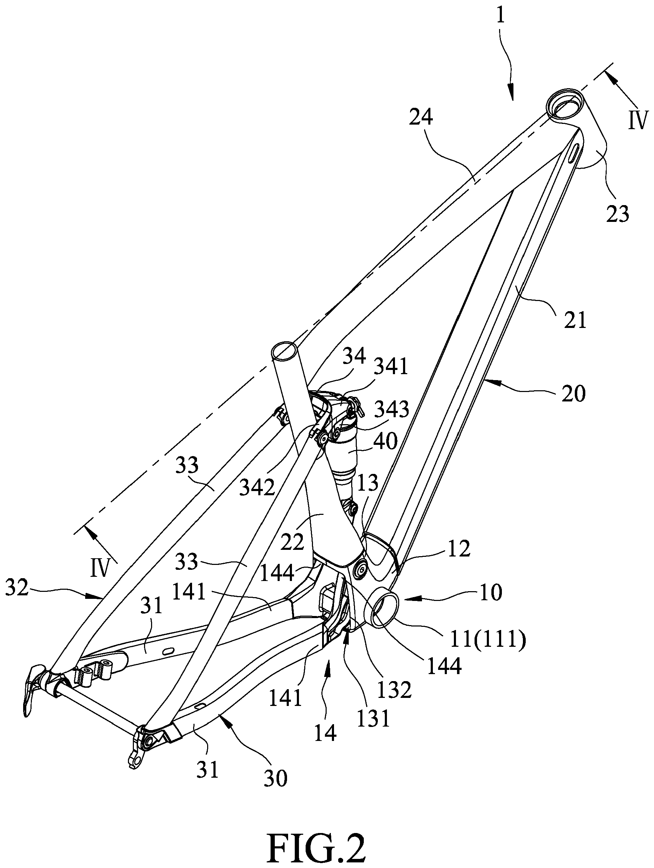

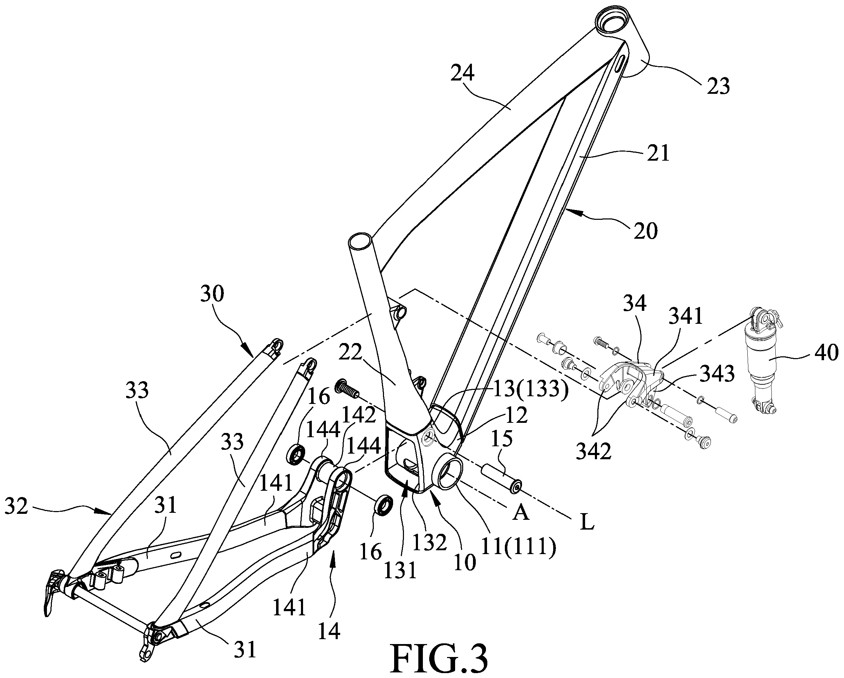

Referring to FIGS. 2 to 4, an embodiment of a bicycle frame 1 according to the disclosure includes a bottom bracket device 10, a front frame body 20, a rear frame body 30 and a shock absorber 40.

The bottom bracket device 10 includes a bottom bracket shell 11, a first down tube 12, a first seat tube 13, a rear fork assembly 14, a pivot shaft 15 and two anti-friction bearings 16.

The bottom bracket shell 11 surrounds a spindle axis (A) in a left-and-right direction to have left and right opened ends 111. The first down tube 12 is connected to and extends forwardly from the bottom bracket shell 11. The first seat tube 13 is connected to and extends upwardly from the bottom bracket shell 11, and has two side walls 133 which are disposed between the left and right opened ends 111 of the bottom bracket shell 11 in the left-and-right direction. The side walls 133 define therebetween a receiving space 131 which has a rear access opening 132 that is opposite to the first down tube 12 in a front-and-rear direction. In this embodiment, a lower end of the first seat tube 13 is connected to a lower end of the first down tube 12 at the bottom bracket shell 11.

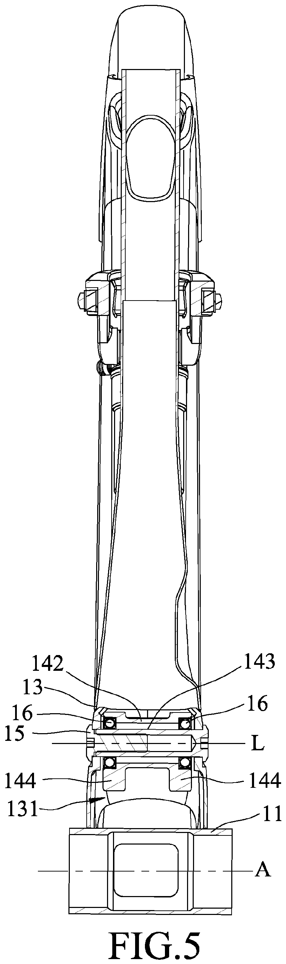

The rear fork assembly 14 includes two rear fork rods 141, a tubular crosspiece 142 and an axial hole 143 (see FIG. 5). Each of the rear fork rods 141 has, at a front end thereof, a front end portion 144 which is inserted into the receiving space 131 from the rear access opening 132 and which is pivotably connected to a respective one of the side walls 133 of the first seat tube 13 about a pivot axis (L) in the left-and-right direction. The front end portions 144 of the rear fork rods 141 are spaced apart from each other in the left-and-right direction. Specifically, the front end portion 144 of each rear fork rod 141 is disposed upwardly of the bottom bracket shell 11.

The tubular crosspiece 142 extends in the left-and-right direction to interconnect the front end portions 144. In this embodiment, the tubular crosspiece 142 is integrally connected with the front end portions 144 of the rear fork rods 141.

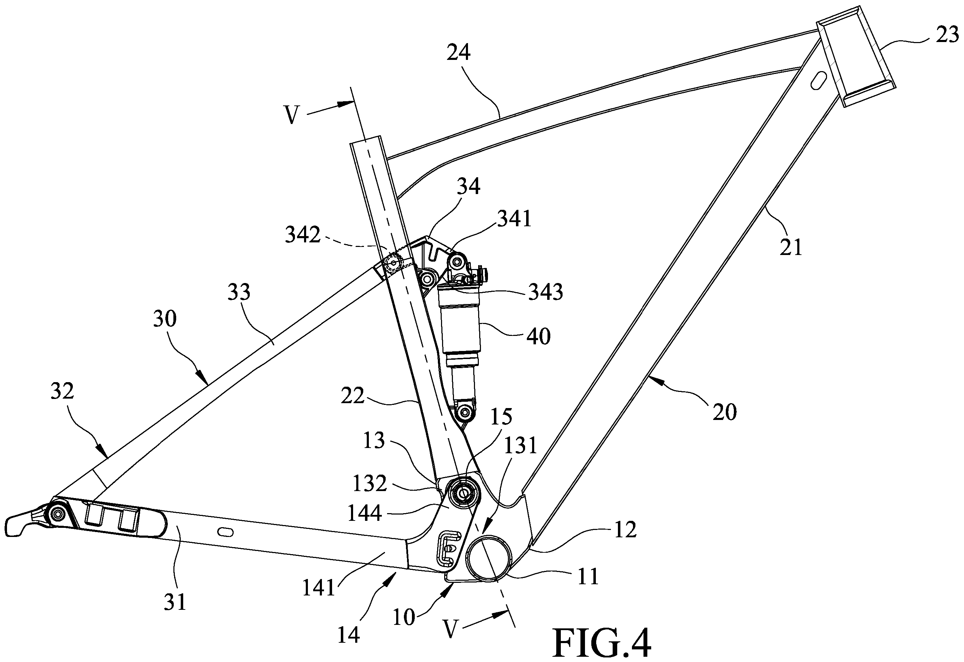

The axial hole 143 extends through the front endportions 144 and the crosspiece 142 along the pivot axis (L). In this embodiment, with reference to FIGS. 4 and 5, the pivot shaft 15 is disposed in the axial hole 143 and extends along the pivot axis (L) to be mounted on the side walls 133 of the first seat tube 13. Each of the anti-friction bearings 16 is disposed between the pivot shaft 15 and the respective one of the front end portions 144. The anti-friction bearings 16 are spaced apart from each other in the left-and-right direction. Hence, the front end portions 144 are pivotably mounted on the first seat tube 13 by virtue of the pivot shaft 15 and the anti-friction bearings 16.

Referring back to FIGS. 2 to 4, the front frame body 20 includes a second down tube 21 which is connected to and extends forwardly and upwardly from the first down tube 12, a second seat tube 22 which is connected to and extends upwardly from the first seat tube 13, a head tube 23 which is connected to and extends upwardly from the second down tube 21, and a top tube 24 which is connected between the second seat tube 22 and the head tube 23. In this embodiment, the second down tube 21 is integrally connected with the first down tube 12, and the second seat tube 22 is integrally connected with the first seat tube 13.

The rear frame body 30 includes two chain stay forks 31 each of which is connected to and extends rearwardly from the respective rear fork rod 141, and a rear stay 32 which is connected to and extends forwardly and upwardly from the chain stay forks 31. In this embodiment, the chain stay forks 31 are integrally connected with the rear fork rods 141.

The rear stay 32 has two rear stay forks 33 which are respectively connected to the chain stay forks 31 and which are spaced apart from each other in the left-and-right direction, and a cross lever 34 which extends in the left-and-right direction to interconnect the rear stay forks 33. The cross lever 34 is pivotably connected to the second seat tube 22. In this embodiment, the cross lever 34 has a front lever end 341 which is pivotably connected to the shock absorber 40, a rear lever end 342 which is connected to the rear stay forks 33, and a fulcrum portion 343 which is interposed between the front and rear lever ends 341, 342 and which is pivotably connected to the second seat tube 22.

The shock absorber 40 is disposed between the front frame body 20 and the rear stay 32. In this embodiment, the shock absorber 40 is disposed between the second seat tube 22 and the cross lever 34. Specifically, the shock absorber 40 has upper and lower ends which are pivotably connected to the front lever end 341 of the cross lever 34 and the second seat tube 22, respectively. Since the structure of the shock absorber 40 is of a known type, a description thereof is dispensed with herein. The shock absorber 40 may be a hydraulic or pneumatic type, a mechanical type such as a biasing spring, etc.

With the front end portions 144 of the rear fork rods 141 which are concealed in the receiving space 131 in the first seat tube 13, the rear fork rods 141 are prevented from generating undesired wind resistance, and the aesthetic appeal of the bicycle frame 1 is satisfactory.

Alternatively, the rear fork assembly 14 may have the front end portions 144 of the rear fork rods 141 separated from each other without providing the tubular crosspiece 142. Still alternatively, without the tubular crosspiece 142, the front end portions 144 of the rear fork rods 141 may be combined to be a single front end portion that is pivotably connected to the first seat tube 13.

## Claims

1. A bottom bracket device (10) comprising
a bottom bracket shell (11) surrounding a spindle axis (A) in a left-and-right direction to have left and right opened ends (111);
a first down tube (12) connected to and extending forwardly from said bottom bracket shell (11);
a first seat tube (13) connected to and extending upwardly from said bottom bracket shell (11), and having two side walls (133) which are disposed between said left and right opened ends (111) in the left-and-right direction, said side walls (133) defining therebetween a receiving space (131) which has a rear access opening (132) that is opposite to said first down tube (12) in a front-and-rear direction; and **characterised in that**
a rear fork assembly (14) having at least one front end portion (144) which is inserted into said receiving space (131) from said rear access opening (132) and which is pivotably connected to said side walls (133) of said first seat tube (13) about a pivot axis (L) in the left-and-right direction,
said rear fork assembly (14) has two of said front end portions (144), said rear fork assembly (14) including two rear fork rods (141) each of which has at a front end thereof a respective one of said front end portions (144), said front end portions (144) of said rear fork rods (141) being inserted into said receiving space (131) and being spaced apart from each other in the left-and-right direction;
said first seat tube (13) being connected to said first down tube (12) at said bottom bracket shell (11).

2. The bottom bracket device (10) as claimed in Claim 1, **characterized in that** said front end portion (144) of each of said rear fork rods (141) is disposed upwardly of said bottom bracket shell (11).

3. The bottom bracket device (10) as claimed in Claim 1, **characterized in that** said rear fork assembly (14) includes a tubular crosspiece (142) which extends in the left-and-right direction to interconnect said front end portions (144), and an axial hole (143) which extends through said front end portions (144) and said crosspiece (142), said bottom bracket device (10) further comprising a pivot shaft (15) which is disposed in said axial hole (143) and which extends along the pivot axis (L) to be mounted on said side walls (133) of said first seat tube (13).

4. The bottom bracket device (10) as claimed in Claim 3, further **characterized by** two anti-friction bearings (16), each disposed between said pivot shaft (15) and the respective one of said front end portions (144).

5. A bicycle frame (1), **characterized by**:
a bottom bracket device (10) as claimed in Claim 1;
a front frame body (20) including a second down tube (21) which is connected to and extends forwardly and upwardly from said first down tube (12), and a second seat tube (22) which is connected to and extends upwardly from said first seat tube (13);
a rear frame body (30) including two chain stay forks (31) each of which is connected to and extends rearwardly from said rear fork assembly (14), and a rear stay (32) which is connected to and extends forwardly and upwardly from said chain stay forks (31); and
a shock absorber (40) disposed between said front frame body (20) and said rear stay (32).

6. The bicycle frame (1) as claimed in Claim 5, **characterized in that** said chain stay forks (31) are connected to said rear fork rods (141), respectively, said front frame body (20) further including a head tube (23) which is connected to and extends upwardly from said second down tube (21), and a top tube (24) which is connected between said second seat tube (22) and said head tube (23).

7. The bicycle frame (1) as claimed in Claim 5, **characterized in that** said rear stay (32) has two rear stay forks (33) which are respectively connected to said chain stay forks (31) and which are spaced apart from each other in the left-and-right direction, and a cross lever (34) which extends in the left-and-right direction to interconnect said rear stay forks (33), said cross lever (34) being pivotably connected to said second seat tube (22), said shock absorber (40) having upper and lower ends which are connected to said cross lever (34) and said second seat tube (22), respectively.

8. The bicycle frame (1) as claimed in Claim 7, **characterized in that** said cross lever (34) has a front lever end (341) which is pivotably connected to said upper end of said shock absorber (40), a rear lever end (342) which is connected to said rear stay forks (33), and a fulcrum portion (343) which is interposed between said front and rear lever ends (341, 342) and which is pivotably connected to said second seat tube (22).

## Patentansprüche

1. Tretlagervorrichtung (10), umfassend:
ein Tretlagergehäuse (11), das eine Spindelachse (A) in einer linken und rechten Richtung so umgibt, dass es ein linkes und rechtes geöffnetes Ende (111) aufweist;
ein erstes Unterrohr (12), das mit dem genannten Tretlagergehäuse (11) verbunden ist und sich von diesem vorwärts erstreckt;
ein erstes Sitzrohr (13), das mit dem genannten Tretlagergehäuse (11) verbunden ist und sich von diesem aufwärts erstreckt und das zwei Seitenwände (133) aufweist, die zwischen dem genannten linken und rechten geöffneten Ende (111) in der linken und rechten Richtung angeordnet sind, wobei die genannten Seitenwände (133) dazwischen einen Aufnahmeraum (131) definieren, der eine hintere Zugangsöffnung (132) aufweist, die dem genannten ersten Unterrohr (12) in einer vorderen und hinteren Richtung gegenüberliegt; und **dadurch gekennzeichnet, dass** eine hintere Gabelanordnung (14), die mindestens einen vorderen Endabschnitt (144) aufweist, der in den genannten Aufnahmeraum (131) von der genannten hinteren Zugangsöffnung (132) eingeführt ist und der mit den genannten Seitenwänden (133) des genannten ersten Sitzrohrs (13) um eine Drehachse (L) in der linken und rechten Richtung drehbar verbunden ist,
wobei die genannte hintere Gabelanordnung (14) zwei der genannten vorderen Endabschnitte (144) aufweist, wobei die genannte hintere Gabelanordnung (14) zwei hintere Gabelstangen (141) beinhaltet, die jeweils an einem vorderen Ende davon einen jeweiligen der genannten vorderen Endabschnitte (144) aufweisen, wobei die genannten vorderen Endabschnitte (144) der genannten hinteren Gabelstangen (141) in den genannten Aufnahmeraum (131) eingeführt sind und voneinander in der linken und rechten Richtung beabstandet sind;
wobei das genannte erste Sitzrohr (13) mit dem genannten ersten Unterrohr (12) an dem genannten Tretlagergehäuse (11) verbunden ist.

2. Tretlagervorrichtung (10) nach Anspruch 1, **dadurch gekennzeichnet, dass** der genannte vordere Endabschnitt (144) von jeder der genannten hinteren Gabelstangen (141) von dem genannten Tretlagergehäuse (11) aufwärts angeordnet ist.

3. Tretlagervorrichtung (10) nach Anspruch 1, **dadurch gekennzeichnet, dass** die genannte hintere Gabelanordnung (14) ein rohrförmiges Kreuzstück (142), das sich in der linken und rechten Richtung erstreckt, um die genannten vorderen Endabschnitte (144) miteinander zu verbinden, und ein Axialloch (143), das sich durch die genannten vorderen Endabschnitte (144) und das genannte Kreuzstück (142) hindurch erstreckt, beinhaltet, wobei die genannte Tretlagervorrichtung (10) ferner eine Drehwelle (15), die in dem genannten Axialloch (143) angeordnet ist und die sich entlang der Drehachse (L) erstreckt, umfasst, um auf den genannten Seitenwänden (133) des genannten ersten Sitzrohrs (13) befestigt zu werden.

4. Tretlagervorrichtung (10) nach Anspruch 3, ferner **gekennzeichnet durch** zwei Wälzlager (16), die jeweils zwischen der genannten Drehwelle (15) und dem jeweiligen der genannten vorderen Endabschnitte (144) angeordnet sind.

5. Fahrradrahmen (1), **gekennzeichnet durch**:
eine Tretlagervorrichtung (10) nach Anspruch 1;
einen vorderen Rahmenkörper (20), der ein zweites Unterrohr (21), das mit dem genannten ersten Unterrohr (12) verbunden ist und sich von diesem vorwärts und aufwärts erstreckt, und ein zweites Sitzrohr (22), das mit dem genannten ersten Sitzrohr (13) verbunden ist und sich von diesem aufwärts erstreckt, beinhaltet;
einen hinteren Rahmenkörper (30), der zwei Kettenstrebengabeln (31), die jeweils mit der genannten hinteren Gabelanordnung (14) verbunden sind und sich von dieser rückwärts erstrecken, und eine hintere Strebe (32), die mit den genannten Kettenstrebengabeln (31) verbunden ist und sich von diesen vorwärts und aufwärts erstreckt, beinhaltet; und
einen Stoßdämpfer (40), der zwischen dem genannten vorderen Rahmenkörper (20) und der genannten hinteren Strebe (32) angeordnet ist.

6. Fahrradrahmen (1) nach Anspruch 5, **dadurch gekennzeichnet, dass** die genannten Kettenstrebengabeln (31) jeweils mit den genannten hinteren Gabelstangen (141) verbunden sind, wobei der genannte vordere Rahmenkörper (20) ferner ein Steuerrohr (23), das mit dem genannten zweiten Unterrohr (21) verbunden ist und sich von diesem aufwärts erstreckt, und ein Oberrohr (24), das zwischen dem genannten zweiten Sitzrohr (22) und dem genannten Steuerrohr (23) verbunden ist, beinhaltet.

7. Fahrradrahmen (1) nach Anspruch 5, **dadurch gekennzeichnet, dass** die genannte hintere Strebe (32) zwei hintere Strebengabeln (33), die jeweils mit den genannten Kettenstrebengabeln (31) verbunden sind und die voneinander in der linken und rechten Richtung beabstandet sind, und einen Kreuzhebel (34), der sich in der linken und rechten Richtung erstreckt, um die genannten hinteren Strebengabeln (33) miteinander zu verbinden, aufweist, wobei der genannte Kreuzhebel (34) mit dem genannten zweiten Sitzrohr (22) drehbar verbunden ist, wobei der genannte Stoßdämpfer (40) ein oberes und unteres Ende aufweist, die mit dem genannten Kreuzhebel (34) bzw. dem genannten zweiten Sitzrohr (22) verbunden sind.

8. Fahrradrahmen (1) nach Anspruch 7, **dadurch gekennzeichnet, dass** der genannte Kreuzhebel (34) ein vorderes Hebelende (341), das mit dem genannten oberen Ende des genannten Stoßdämpfers (40) drehbar verbunden ist, ein hinteres Hebelende (342), das mit den genannten hinteren Strebengabeln (33) verbunden ist, und einen Gelenkpunktabschnitt (343), der zwischen dem genannten vorderen und hinteren Hebelende (341, 342) liegt und der mit dem genannten zweiten Sitzrohr (22) drehbar verbunden ist, aufweist.

## Revendications

1. Dispositif de jeu de pédalier (10), comprenant
un boîtier de pédalier (11) entourant un axe de pédalier (A) dans une direction gauche-droite pour avoir des extrémités gauche et droite ouvertes (111) ;
un premier tube diagonal (12) relié audit boîtier de pédalier (11) et s'étendant vers l'avant à partir de celui-ci ;
un premier tube de selle (13) relié audit boîtier de pédalier (11) et s'étendant vers le haut à partir de celui-ci, et ayant deux parois latérales (133) qui sont disposées entre lesdites extrémités gauche et droite ouvertes (111) dans la direction gauche-droite, lesdites parois latérales (133) définissant entre elles un espace de réception (131) qui présente une ouverture d'accès arrière (132) qui est opposée audit premier tube diagonal (12) dans une direction avant-arrière; et **caractérisé en ce que**
un ensemble fourche arrière (14) ayant au moins une partie d'extrémité avant (144) qui est insérée dans ledit espace de réception (131) à partir de ladite ouverture d'accès arrière (132) et qui est reliée de façon pivotante auxdites parois latérales (133) dudit premier tube de selle (13) autour d'un axe de pivotement (L) dans la direction gauche-droite,
ledit ensemble fourche arrière (14) comporte deux desdites parties d'extrémité avant (144), ledit ensemble fourche arrière (14) comprenant deux bras de fourche arrière (141) dont chacun comporte au niveau d'une extrémité avant de celui-ci une partie respective desdites parties d'extrémité avant (144), lesdites parties d'extrémité avant (144) desdits bras de fourche arrière (141) étant insérées dans ledit espace de réception (131) et étant espacées l'une de l'autre dans la direction gauche-droite;
ledit premier tube de selle (13) étant relié audit premier tube diagonal (12) au niveau dudit boîtier de pédalier (11).

2. Dispositif de jeu de pédalier (10) selon la revendication 1, **caractérisé en ce que** ladite partie d'extrémité avant (144) de chacun desdits bras de fourche arrière (141) est disposée vers le haut dudit boîtier de pédalier (11).

3. Dispositif de jeu de pédalier (10) selon la revendication 1, **caractérisé en ce que** ledit ensemble fourche arrière (14) comprend une traverse tubulaire (142) qui s'étend dans la direction gauche-droite pour interconnecter lesdites parties d'extrémité avant (144), et un trou axial (143) qui s'étend à travers lesdites parties d'extrémité avant (144) et ladite traverse (142), ledit dispositif de jeu de pédalier (10) comprenant en outre un arbre de pivotement (15) qui est disposé dans ledit trou axial (143) et qui s'étend le long de l'axe de pivotement (L) pour être monté sur lesdites parois latérales (133) dudit premier tube de selle (13).

4. Dispositif de jeu de pédalier (10) selon la revendication 3, **caractérisé en outre par** deux paliers anti-friction (16), chacun disposé entre ledit arbre de pivotement (15) et l'une respective desdites parties d'extrémité avant (144).

5. Cadre de bicyclette (1), **caractérisé par** :
un dispositif de jeu de pédalier (10) tel que revendiqué dans la revendication 1;
un corps de cadre avant (20) comprenant un second tube diagonal (21) qui est relié audit premier tube diagonal (12) et s'étend vers l'avant et vers le haut à partir de celui-ci, et un second tube de selle (22) qui est relié audit premier tube de selle et s'étend vers le haut à partir de celui-ci (13) ;
un corps de cadre arrière (30) comprenant deux fourches de base (31) dont chacune est reliée audit ensemble fourche arrière (14) et s'étend vers l'arrière à partir de celui-ci, et un hauban arrière (32) qui est relié auxdites fourches de base et s'étend vers l'avant et vers le haut à partir de celles-ci (31) ; et
un amortisseur (40) disposé entre ledit corps de cadre avant (20) et ledit hauban arrière (32).

6. Cadre de bicyclette (1) selon la revendication 5, **caractérisé en ce que** lesdites fourches de base (31) sont reliées auxdits bras de fourche arrière (141), respectivement, ledit corps de cadre avant (20) comprenant en outre un tube de direction (23) qui est relié audit second tube diagonal (21) et s'étend vers le haut à partir de celui-ci, et un tube horizontal (24) qui est connecté entre ledit second tube de selle (22) et ledit tube de direction (23).

7. Cadre de bicyclette (1) selon la revendication 5, **caractérisé en ce que** ledit hauban arrière (32) comporte deux fourches de hauban arrière (33) qui sont reliées respectivement auxdites fourches de base (31) et qui sont espacées l'une de l'autre dans la direction gauche-droite, et un levier transversal (34) qui s'étend dans la direction gauche-droite pour interconnecter lesdites fourches de hauban arrière (33), ledit levier transversal (34) étant relié de manière pivotante audit second tube de selle (22), ledit amortisseur (40) ayant des extrémités supérieure et inférieure qui sont reliées audit levier transversal (34) et audit second tube de selle (22), respectivement.

8. Cadre de bicyclette (1) selon la revendication 7, **caractérisé en ce que** le levier transversal (34) présente une extrémité de levier avant (341) qui est reliée de manière pivotante à ladite extrémité supérieure dudit amortisseur (40), une extrémité de levier arrière (342) qui est reliée auxdites fourches de hauban arrière (33), et une partie de point d'appui (343) qui est interposée entre lesdites extrémités de levier avant et arrière (341, 342) et qui est reliée de manière pivotante audit second tube de selle (22).
